(19) Europäisches Patentamt
European Patent Office
Office européen des brevets

(11) EP 4 144 767 A1

(12) **EUROPEAN PATENT APPLICATION**
published in accordance with Art. 153(4) EPC

(43) Date of publication:
**08.03.2023 Bulletin 2023/10**

(21) Application number: **21795462.7**

(22) Date of filing: **15.03.2021**

(51) International Patent Classification (IPC):
***C08F 4/654*** *(2006.01)* ***C08F 10/00*** *(2006.01)*

(52) Cooperative Patent Classification (CPC):
**C08F 4/654; C08F 10/00;** Y02P 20/52

(86) International application number:
**PCT/JP2021/010320**

(87) International publication number:
**WO 2021/220645 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.04.2020 JP 2020079595**

(71) Applicant: **TOHO TITANIUM CO., LTD.**
**Chigasaki-shi, Kanagawa 253-8510 (JP)**

(72) Inventors:
- **KONO, Hiroyuki**
**Chigasaki-shi, Kanagawa 253-8510 (JP)**
- **WADA, Emiko**
**Chigasaki-shi, Kanagawa 253-8510 (JP)**

(74) Representative: **Müller-Boré & Partner Patentanwälte PartG mbB**
**Friedenheimer Brücke 21**
**80639 München (DE)**

# (54) SOLID CATALYST COMPONENT FOR OLEFIN POLYMERIZATION, CATALYST FOR OLEFIN POLYMERIZATION, AND METHOD FOR PRODUCING OLEFIN POLYMER

(57) Provided is a solid catalyst component for polymerization of an olefin which is capable of realizing stereoregularity and wide molecular weight distribution of the resulting polymer, copolymerization activity, and block ratio of the resulting copolymer in a well-balanced manner while satisfying these properties at a level sufficient for practical use despite containing an electron-donating compound other than a phthalic acid ester. The present invention provides a solid catalyst component for polymerization of an olefin, comprising: magnesium, titanium, halogen, an ether carbonate compound (A), and a succinic acid diester compound (B), wherein a molar ratio represented by the following expression is 0.01 to 1.00: content of the ether carbonate compound (A) / content of the succinic acid diester compound (B).

EP 4 144 767 A1

## Description

[Technical Field]

The present invention relates to a solid catalyst component for polymerization of an olefin, a catalyst for polymerization of an olefin, and a method for producing a polymer of an olefin.

[Background Art]

Conventionally, a solid catalyst formed of a transition metal catalyst component such as titanium and a main group-metal catalyst component such as aluminum is widely known as a catalyst for polymerization of an olefin.

A solid catalyst component containing a magnesium atom, a titanium atom, a halogen atom, and an electron-donating compound as essential components has been known for use in the polymerization of an olefin such as propylene. Many methods have been proposed to polymerize or copolymerize olefins in the presence of the solid catalyst component, a catalyst for polymerization of an olefin composed of an organoaluminum compound and an organosilicon compound.

For example, in Patent Literature 1, a method for polymerizing propylene by using a catalyst for polymerization of an olefin containing a solid titanium catalyst component with an electron-donating compound such as a phthalic acid ester supported, and an organoaluminum compound and an organosilicon compound having at least one Si-O-C bond as promoter components, has been proposed. In many literatures including the patent literature described above, a method for obtaining a polymer with high stereoregularity under high polymerization activity by using a phthalic acid ester as an electron-donating compound has been proposed.

However, di-n-butyl phthalate and benzyl butyl phthalate as one of phthalic acid esters are identified as substances of very high concern (SVHC) in Registration, Evaluation, Authorization and Restriction of Chemicals (REACH) regulation in Europe. From the viewpoint of reducing environmental impact, a demand for converting to a catalyst system without the use of an SVHC substance is growing.

A solid catalyst component prepared using an electron-donating compound other than phthalic acid esters, such as an alkoxyalkyl ester, a maleic acid ester, and a cyclohexene dicarboxylic acid diester, which is not subject to REACH regulation, is known under such circumstances.

[Citation List]

[Patent Literature]

[Patent Literature 1] Japanese Patent Laid-Open No. 57-63310

[Summary of Invention]

[Technical Problem]

A solid catalyst component using an electron-donating compound other than the phthalic acid esters described above, however, hardly provides performance equal to that of a solid catalyst component using a phthalic acid ester when used in the polymerization, and in particular, tends to have inferior primary physical properties such as stereoregularity of the resulting polymer or be inferior in copolymerization activity and block ratio when olefins are copolymerized, so that further improvement has been required. Moreover, in order to improve the rigidity and impact strength of the resulting polymer, a solid catalyst component for polymerization of an olefin that can produce a polymer with wide molecular weight distribution is required.

For example, a solid catalyst component containing an alkoxyalkyl ester as an electron-donating compound other than a phthalic acid ester tends to be slightly inferior in polymerization activity to a solid catalyst component using a phthalic acid ester when used in the polymerization of an olefin, and the stereoregularity of the resulting polymer is far from being at a high level.

In addition, when a solid catalyst component containing a maleic acid ester as an electron-donating compound other than a phthalic acid ester, for example, is used in the polymerization of an olefin, the stereoregularity of the resulting polymer is far from being at a high level.

Furthermore, when a solid catalyst component containing a cyclohexene dicarboxylic acid diester as an electron-donating compound other than a phthalic acid ester, for example, is used in the polymerization of an olefin, the stereoregularity of the resulting polymer reaches a level equal to that of a solid catalyst component using a phthalic acid ester, while the copolymerization activity during copolymerization and the block ratio of the resulting copolymer are far from being at a high level.

Thus, when an electron-donating compound other than a phthalic acid ester is used, no solid catalyst component has been known that is capable of realizing the stereoregularity and wide molecular weight distribution of the resulting polymer, copolymerization activity, and block ratio of the resulting copolymer in a well-balanced manner for practical use.
Under such circumstances, an object of the present invention is to provide a solid catalyst component for polymerization of an olefin containing an electron-donating compound, which is not subject to REACH regulation, other than a phthalic acid ester, the solid catalyst component that contains an electron-donating compound other than a phthalic acid ester and is capable of realizing the stereoregularity and wide molecular weight distribution of the resulting polymer, copolymerization activity, and block ratio of the resulting copolymer in a well-balanced manner while satisfying these properties at a level sufficient for practical use; and to provide a catalyst for polymerization of an olefin and a method for producing a polymer of an olefin by using the solid catalyst component for polymerization of an olefin according to the present invention.

[Solution to Problem]

The present inventors have conducted diligent studies to solve the technical problems described above and consequently found that the technical problems can be solved by a solid catalyst component for polymerization of an olefin containing a magnesium atom, a titanium atom, a halogen atom, an ether carbonate compound (A), and a succinic acid diester compound (B), with a specific quantitative ratio of the content of the ether carbonate compound (A) to the content of the succinic acid diester compound (B). On the basis of the finding, the present invention has been completed.
Specifically, the present invention provides:

(1) a solid catalyst component for polymerization of an olefin, comprising:

magnesium, titanium, halogen, an ether carbonate compound (A), and a succinic acid diester compound (B), wherein
a molar ratio represented by the following expression is 0.01 to 1.00:

content of the ether carbonate compound (A) /
content of the succinic acid diester compound (B);

(2) the solid catalyst component for polymerization of an olefin according to (1), wherein the ether carbonate compound (A) is one or more selected from compounds represented by the following general formula (1) :

$$R^1\text{-O-C(=O)-O-Z-O-}R^2 \qquad (1)$$

wherein $R^1$ and $R^2$ are the same as or different from each other and each represent a linear alkyl group having 1 to 20 carbon atoms, a branched alkyl group having 3 to 20 carbon atoms, a vinyl group, a linear alkenyl group or branched alkenyl group having 3 to 20 carbon atoms, a linear halogen-substituted alkyl group having 1 to 20 carbon atoms, a branched halogen-substituted alkyl group having 3 to 20 carbon atoms, a linear halogen-substituted alkenyl group having 2 to 20 carbon atoms, a branched halogen-substituted alkenyl group having 3 to 20 carbon atoms, a cycloalkyl group having 3 to 20 carbon atoms, a cycloalkenyl group having 3 to 20 carbon atoms, a halogen-substituted cycloalkyl group having 3 to 20 carbon atoms, a halogen-substituted cycloalkenyl group having 3 to 20 carbon atoms, an aromatic hydrocarbon group having 6 to 24 carbon atoms, a halogen-substituted aromatic hydrocarbon group having 6 to 24 carbon atoms, a nitrogen atom-containing hydrocarbon group having 2 to 24 carbon atoms and having a carbon atom at a bonding end, an oxygen atom-containing hydrocarbon group having 2 to 24 carbon atoms and having a carbon atom at a bonding end, or a phosphorus-containing hydrocarbon group having 2 to 24 carbon atoms and having a carbon atom at a bonding end, except for the nitrogen atom-containing hydrocarbon group having 2 to 24 carbon atoms with a C=N group at a bonding end, the oxygen atom-containing hydrocarbon group having 2 to 24 carbon atoms with a carbonyl group at a bonding end, and the phosphorus-containing hydrocarbon group having 2 to 24 carbon atoms with a C=P group at a bonding end; and Z represents a linking group forming a linkage via a carbon atom or a carbon chain;
(3) the solid catalyst component for polymerization of an olefin according to (1) or (2), wherein the succinic acid diester compound (B) is one or more selected from compounds represented by the following general formula (2):

[Formula 1]

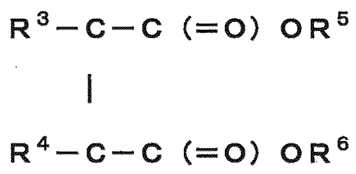

(2)

wherein $R^3$ and $R^4$ are the same as or different from each other and are each a hydrogen atom or an alkyl group having 1 to 4 carbon atoms; and $R^5$ and $R^6$ are the same as or different from each other and are each a linear alkyl group or branched alkyl group having 2 to 4 carbon atoms;
(4) a catalyst for polymerization of an olefin, comprising:

(I) the solid catalyst component for polymerization of an olefin according to any one of (1) to (3); and (II) an organoaluminum compound represented by the following general formula (3):

$$R^7_pAlQ_{3-p} \qquad (3)$$

wherein $R^7$ is an alkyl group having 1 to 6 carbon atoms; Q is a hydrogen atom or halogen; p is a real number of $0 < p \leq 3$; when a plurality of $R^7$ are present, each $R^7$ is the same as or different from each other; and when a plurality of Q are present, each Q is the same as or different from each other;

(5) the catalyst for polymerization of an olefin according to (4), comprising:

(I) the solid catalyst component for polymerization of an olefin according to any one of (1) to (3);
(II) an organoaluminum compound represented by the following general formula (3):

$$R^7_pAlQ_{3-p} \qquad (3)$$

wherein $R^7$ is an alkyl group having 1 to 6 carbon atoms; Q is a hydrogen atom or halogen; p is a real number of $0 < p \leq 3$; when a plurality of $R^7$ are present, each R7 is the same as or different from each other; and when a plurality of Q are present, each Q is the same as or different from each other; and
(III) an external electron-donating compound; and

(6) a method for producing a polymer of an olefin, comprising polymerizing an olefin in the presence of the catalyst for polymerization of an olefin according to (4) or (5).

[Advantageous Effects of Invention]

The present invention can provide a solid catalyst component for polymerization of an olefin which is capable of realizing the stereoregularity and wide molecular weight distribution of the resulting polymer, copolymerization activity, and block ratio of the resulting copolymer in a well-balanced manner while satisfying these properties at a level sufficient for practical use despite containing an electron-donating compound other than a phthalic acid ester, and can provide a catalyst for polymerization of an olefin and a method for producing a polymer of an olefin by using the solid catalyst component for polymerization of an olefin according to the present invention.

[Description of Embodiments]

First, the solid catalyst component for polymerization of an olefin according to the present invention will be described.
The solid catalyst component for polymerization of an olefin according to the present invention comprises:

magnesium, titanium, halogen, an ether carbonate compound (A), and a succinic acid diester compound (B), wherein a molar ratio represented by the following expression is 0.01 to 1.00: content of the ether carbonate compound (A) / content of the succinic acid diester compound (B).

The halogen contained in the solid catalyst component for polymerization of an olefin according to the present invention is, for example, preferably one or more atoms selected from a fluorine atom, a chlorine atom, a bromine atom, and an iodine atom, more preferably one or more selected from a chlorine atom, a bromine atom, and an iodine atom, further preferably one or more selected from a chlorine atom and an iodine atom.

The ether carbonate compound (A) contained in the solid catalyst component for polymerization of an olefin according to the present invention is preferably one or more selected from compounds represented by the following general formula (1):

$$R^1\text{-O-C(=O)-O-Z-O-}R^2 \qquad (1)$$

wherein $R^1$ and $R^2$ are the same as or different from each other and each represent a linear alkyl group having 1 to 20 carbon atoms, a branched alkyl group having 3 to 20 carbon atoms, a vinyl group, a linear alkenyl group or branched alkenyl group having 3 to 20 carbon atoms, a linear halogen-substituted alkyl group having 1 to 20 carbon atoms, a branched halogen-substituted alkyl group having 3 to 20 carbon atoms, a linear halogen-substituted alkenyl group having 2 to 20 carbon atoms, a branched halogen-substituted alkenyl group having 3 to 20 carbon atoms, a cycloalkyl group having 3 to 20 carbon atoms, a cycloalkenyl group having 3 to 20 carbon atoms, a halogen-substituted cycloalkyl group having 3 to 20 carbon atoms, a halogen-substituted cycloalkenyl group having 3 to 20 carbon atoms, an aromatic hydrocarbon group having 6 to 24 carbon atoms, a halogen-substituted aromatic hydrocarbon group having 6 to 24 carbon atoms, a nitrogen atom-containing hydrocarbon group having 2 to 24 carbon atoms and having a carbon atom at a bonding end, an oxygen atom-containing hydrocarbon group having 2 to 24 carbon atoms and having a carbon atom at a bonding end, or a phosphorus-containing hydrocarbon group having 2 to 24 carbon atoms and having a carbon atom at a bonding end, except for the nitrogen atom-containing hydrocarbon group having 2 to 24 carbon atoms with a C=N group at a bonding end, the oxygen atom-containing hydrocarbon group having 2 to 24 carbon atoms with a carbonyl group at a bonding end, and the phosphorus-containing hydrocarbon group having 2 to 24 carbon atoms with a C=P group at a bonding end; and Z represents a linking group forming a linkage via a carbon atom or a carbon chain.

Examples of the linear alkyl group having 1 to 20 carbon atoms, represented by $R^1$ or $R^2$ in the general formula (1) include a methyl group, an ethyl group, a n-propyl group, a n-butyl group, a n-pentyl group, a n-hexyl group, a n-pentyl group, a n-octyl group, a n-nonyl group, and a n-decyl group. A linear alkyl group having 1 to 12 carbon atoms is preferred.

Examples of the branched alkyl group having 3 to 20 carbon atoms, represented by $R^1$ or $R^2$ include alkyl groups having secondary carbon or tertiary carbon, such as an isopropyl group, an isobutyl group, a t-butyl group, an isopentyl group, and a neopentyl group. A branched alkyl group having 3 to 12 carbon atoms is preferred.

Examples of the linear alkenyl group having 3 to 20 carbon atoms, represented by $R^1$ or $R^2$ include an allyl group, a 3-butenyl group, a 4-hexenyl group, a 5-hexenyl group, a 7-octenyl group, and a 10-dodecenyl group. A linear alkenyl group having 3 to 12 carbon atoms is preferred. Examples of the branched alkenyl group having 3 to 20 carbon atoms include an isopropenyl group, an isobutenyl group, an isopentenyl group, and a 2-ethyl,3-hexenyl group. A branched alkenyl group having 3 to 12 carbon atoms is preferred.

Examples of the linear halogen-substituted alkyl group having 1 to 20 carbon atoms, represented by $R^1$ or $R^2$ include a methyl halide group, an ethyl halide group, a n-propyl halide group, a n-butyl halide group, a n-pentyl halide group, a n-hexyl halide group, a n-pentyl halide group, a n-octyl halide group, a nonyl halide group, a decyl halide group, a halogen-substituted undecyl group, and a halogen-substituted dodecyl group. A linear halogen-substituted alkyl group having 1 to 12 carbon atoms is preferred. Examples of the branched halogen-substituted alkyl group having 3 to 20 carbon atoms include an isopropyl halide group, an isobutyl halide group, a 2-ethylhexyl halide group, and a neopentyl halide group. A branched halogen-substituted alkyl group having 3 to 12 carbon atoms is preferred.

Examples of the linear halogen-substituted alkenyl group having 2 to 20 carbon atoms, represented by $R^1$ or $R^2$ include a vinyl 2-halide group, an allyl 3-halide group, a 2-butenyl 3-halide group, a 3-butenyl 4-halide group, a 2-butenyl perhalide group, a 4-hexenyl 6-halide group, and a methyl-2-propenyl 3-trihalide group. A halogen-substituted alkenyl group having 2 to 12 carbon atoms is preferred. Examples of the branched halogen-substituted alkenyl group having 3 to 20 carbon atoms include a 2-butenyl 3-trihalide group, an ethyl-3-hexenyl 2-pentahalide group, a 3-ethyl-4-hexenyl 6-halide group, and an isobutenyl 3-halide group. A branched halogen-substituted alkenyl group having 3 to 12 carbon atoms is preferred.

Examples of the cycloalkyl group having 3 to 20 carbon atoms, represented by $R^1$ or $R^2$ include a cyclopropyl group, a cyclobutyl group, a cyclopentyl group, a tetramethylcyclopentyl group, a cyclohexyl group, a methylcyclohexyl group, a cycloheptyl group, a cyclooctyl group, a cyclononyl group, a cyclodecyl group, and a butylcyclopentyl group. A cycloalkyl group having 3 to 12 carbon atoms is preferred. Examples of the cycloalkenyl group having 3 to 20 carbon atoms include a cyclopropenyl group, a cyclopentenyl group, a cyclohexenyl group, a cyclooctenyl group, and a norbornene group. A cycloalkenyl group having 3 to 12 carbon atoms is preferred.

Examples of the halogen-substituted cycloalkyl group having 3 to 20 carbon atoms, represented by $R^1$ or $R^2$

include a halogen-substituted cyclopropyl group, a halogen-substituted cyclobutyl group, a halogen-substituted cyclopentyl group, a halogen-substituted trimethylcyclopentyl group, a halogen-substituted cyclohexyl group, a halogen-substituted methylcyclohexyl group, a halogen-substituted cycloheptyl group, a halogen-substituted cyclooctyl group, a halogen-substituted cyclononyl group, a halogen-substituted cyclodecyl group, and a halogen-substituted butylcyclopentyl group. A halogen-substituted cycloalkyl group having 3 to 12 carbon atoms is preferred.

Examples of the halogen-substituted cycloalkenyl group having 3 to 20 carbon atoms, represented by $R^1$ or $R^2$ include a halogen-substituted cyclopropenyl group, a halogen-substituted cyclobutenyl group, a halogen-substituted cyclopentenyl group, a halogen-substituted trimethylcyclopentenyl group, a halogen-substituted cyclohexenyl group, a halogen-substituted methylcyclohexenyl group, a halogen-substituted cycloheptenyl group, a halogen-substituted cyclooctenyl group, a halogen-substituted cyclononenyl group, a halogen-substituted cyclodecenyl group, and a halogen-substituted butylcyclopentenyl group. A halogen-substituted cycloalkenyl group having 3 to 12 carbon atoms is preferred.

Examples of the aromatic hydrocarbon group having 6 to 24 carbon atoms, represented by $R^1$ or $R^2$ include a phenyl group, a methylphenyl group, a dimethylphenyl group, an ethylphenyl group, a benzyl group, a 1-phenylethyl group, a 2-phenylethyl group, a 2-phenylpropyl group, a 1-phenylbutyl group, a 4-phenylbutyl group, a 2-phenylheptyl group, a tolyl group, a xylyl group, a naphthyl group, and a 1,8-dimethylnaphthyl group. An aromatic hydrocarbon group having 6 to 12 carbon atoms is preferred.

Examples of the halogen-substituted aromatic hydrocarbon group having 6 to 24 carbon atoms, represented by $R^1$ or $R^2$ include a phenyl halide group, a methylphenyl halide group, a methylphenyl trihalide group, a benzyl perhalide group, a phenyl perhalide group, an ethyl 2-phenyl-2-halide group, a naphthyl perhalide group, and a butyl 4-phenyl-2,3-dihalide group. A halogen-substituted aromatic hydrocarbon group having 6 to 12 carbon atoms is preferred.

Examples of the halogen in the halogen-substituted alkyl group, the halogen-substituted alkenyl group, the halogen-substituted cycloalkyl group, the halogen-substituted cycloalkenyl group, and the halogen-substituted aromatic hydrocarbon group, each of which is represented by $R^1$ or $R^2$ include fluorine, chlorine, bromine, and iodine. Fluorine, chlorine, and bromine are preferred.

The nitrogen atom-containing hydrocarbon group having 2 to 24 carbon atoms, except for a group having a C=P group at a bonding end, represented by $R^1$ or $R^2$ is a group having a carbon atom at a bonding end, and examples thereof include: alkylaminoalkyl groups such as a methylaminomethyl group, a dimethylaminomethyl group, an ethylaminomethyl group, a diethylaminomethyl group, a propylaminomethyl group, a dipropylaminomethyl group, a methylaminoethyl group, a dimethylaminoethyl group, an ethylaminoethyl group, a diethylaminoethyl group, a propylaminoethyl group, a dipropylaminoethyl group, a butylaminoethyl group, a dibutylaminoethyl group, a pentylaminoethyl group, a dipentylaminoethyl group, a hexylaminoethyl group, a hexylmethylaminoethyl group, a heptylmethylaminoethyl group, a diheptylaminomethyl group, an octylmethylaminomethyl group, a dioctylaminoethyl group, a nonylaminomethyl group, a dinonylaminomethyl group, a decylaminomethyl group, a didecylamino group, a cyclohexylaminomethyl group, and a dicyclohexylaminomethyl group; arylaminoalkyl groups or alkylarylaminoalkyl groups such as a phenylaminomethyl group, a diphenylaminomethyl group, a ditolylaminomethyl group, a dinaphthylaminomethyl group, and a methylphenylaminoethyl group; polycyclic aminoalkyl groups, amino group-containing aromatic hydrocarbon groups such as an anilino group, a dimethylaminophenyl group, and a bisdimethylaminophenyl group, iminoalkyl groups such as a methyliminomethyl group, an ethyliminoethyl group, a propylimino group, a butylimino group, and a phenylimino group. A nitrogen atom-containing hydrocarbon group having 2 to 12 carbon atoms is preferred. The bonding end refers to an atom or a group on the oxygen atom side bonded to $R^1$ or $R^2$.

The oxygen atom-containing hydrocarbon group having 2 to 24 carbon atoms, except for a group having a carbonyl group at a bonding end, represented by $R^1$ or $R^2$ is a group having a carbon atom at a bonding end, and examples thereof include: ether group-containing hydrocarbon groups such as a methoxymethyl group, an ethoxymethyl group, a propoxymethyl group, a butoxymethyl group, an isopropoxymethyl group, an isobutoxymethyl group, a methoxyethyl group, an ethoxyethyl group, a propoxyethyl group, a butoxyethyl group, an isopropoxyethyl group, and an isobutoxyethyl group; aryloxyalkyl groups such as a phenoxymethyl group, a methylphenoxymethyl group, a dimethylphenoxymethyl group, and a naphthoxymethyl group; alkoxyaryl groups such as a methoxyphenyl group and an ethoxyphenyl group; and acetoxymethyl groups. An oxygen atom-containing hydrocarbon group having 2 to 12 carbon atoms is preferred.

The bonding end refers to an atom or a group on the oxygen atom side bonded to $R^1$ or $R^2$.

The phosphorus-containing hydrocarbon group having 2 to 24 carbon atoms, except for a group having a C=P group at a bonding end, represented by $R^1$ or $R^2$ is a group having a carbon atom at a bonding end, and examples thereof include: dialkylphosphinoalkyl groups such as a dimethylphosphinomethyl group, a dibutylphosphinomethyl group, a dicyclohexylphosphinomethyl group, a dimethylphosphinoethyl group, a dibutylphosphinoethyl group, and a dicyclohexylphosphinoethyl group; diarylphosphinoalkyl groups such as a diphenylphosphinomethyl group and a ditolylphosphinomethyl group; and phosphino group-substituted aryl groups such as a dimethylphosphinophenyl group and a diethylphosphinophenyl group. A phosphorus-containing hydrocarbon group having 2 to 12 carbon atoms is preferred. The bonding end refers to an atom or a group on the oxygen atom side bonded to $R^1$ or $R^2$.

$R^2$ is particularly preferably a linear alkyl group having 1 to 12 carbon atoms, a branched alkyl group having 3 to 12 carbon atoms and having $-CH_2-$ at a bonding end, a vinyl group, a linear alkenyl group having 3 to 12 carbon atoms, a branched alkenyl group having 3 to 12 carbon atoms and having -CH2- at a bonding end, a linear halogen-substituted alkyl group having 1 to 12 carbon atoms, a branched halogen-substituted alkyl group having 3 to 12 carbon atoms and having $-CH_2-$ at a bonding end, a linear halogen-substituted alkenyl group having 3 to 12 carbon atoms, a branched halogen-substituted alkenyl group having 3 to 12 carbon atoms and having $-CH_2-$ at a bonding end, a cycloalkyl group having 4 to 12 carbon atoms and having $-CH_2-$ at a bonding end, a cycloalkenyl group having 4 to 12 carbon atoms and having $-CH_2-$ at a bonding end, a halogen-substituted cycloalkyl group having 4 to 12 carbon atoms and having $-CH_2-$ at a bonding end, a halogen-substituted cycloalkenyl group having 4 to 12 carbon atoms and having $-CH_2-$ at a bonding end, or an aromatic hydrocarbon group having 7 to 12 carbon atoms and having $-CH_2-$ at a bonding end. The bonding end of $R^2$ refers to a group on the oxygen atom side bonded to $R^2$.

In the general formula (1), Z is a divalent linking group that links a carbonate group to an ether group ($OR^2$ group), preferably a linking group that links, via a carbon chain, the two oxygen atoms bonded to Z, wherein the carbon chain is composed of two carbon atoms. When Z is a cyclic group such as a cycloalkylene group, a cycloalkenylene group, a halogen-substituted cycloalkylene group, a halogen-substituted cycloalkenylene group, an aromatic hydrocarbon group, or a halogen-substituted aromatic hydrocarbon group, the linking group that links, via a carbon chain, the two oxygen atoms bonded to Z, wherein the carbon chain is composed of two carbon atoms, means that two adjacent carbon chains in the carbon chain constituting the cyclic form the carbon chain between the two oxygen atoms bonded to Z.

Z is preferably a linear alkylene group having 1 to 20 carbon atoms, a branched alkylene group having 3 to 20 carbon atoms, a vinylene group, a linear alkenylene group or branched alkenylene group having 3 to 20 carbon atoms, a linear halogen-substituted alkylene group having 1 to 20 carbon atoms, a branched halogen-substituted alkylene group having 3 to 20 carbon atoms, a linear halogen-substituted alkenylene group or branched halogen-substituted alkenylene group having 3 to 20 carbon atoms, a cycloalkylene group having 3 to 20 carbon atoms, a cycloalkenylene group having 3 to 20 carbon atoms, a halogen-substituted cycloalkylene group having 3 to 20 carbon atoms, a halogen-substituted cycloalkenylene group having 3 to 20 carbon atoms, an aromatic hydrocarbon group having 6 to 24 carbon atoms, a halogen-substituted aromatic hydrocarbon group having 6 to 24 carbon atoms, a nitrogen atom-containing hydrocarbon group having 1 to 24 carbon atoms, an oxygen atom-containing hydrocarbon group having 1 to 24 carbon atoms, or a phosphorus-containing hydrocarbon group having 1 to 24 carbon atoms.

Z is particularly preferably a linear alkylene group having 2 carbon atoms, a branched alkylene group having 3 to 12 carbon atoms, a vinylene group, a linear alkenylene group or branched alkenylene group having 3 to 12 carbon atoms, a linear halogen-substituted alkylene group having 2 to 12 carbon atoms, a branched halogen-substituted alkylene group having 3 to 12 carbon atoms, a linear halogen-substituted alkenylene group or branched halogen-substituted alkenylene group having 3 to 12 carbon atoms, a cycloalkylene group having 3 to 12 carbon atoms, a cycloalkenylene group having 3 to 12 carbon atoms, a halogen-substituted cycloalkylene group having 3 to 12 carbon atoms, a halogen-substituted cycloalkenylene group having 3 to 12 carbon atoms, an aromatic hydrocarbon group having 6 to 12 carbon atoms, a halogen-substituted aromatic hydrocarbon group having 6 to 12 carbon atoms, a nitrogen atom-containing hydrocarbon group having 2 to 12 carbon atoms, an oxygen atom-containing hydrocarbon group having 2 to 12 carbon atoms, or a phosphorus-containing hydrocarbon group having 2 to 12 carbon atoms, and a group that links, via a carbon chain, the two oxygen atoms bonded to Z, wherein the carbon chain is composed of two carbon atoms.

Examples of the linear alkylene group having 1 to 20 carbon atoms, represented by Z include an ethylene group, a trimethylene group, a tetramethylene group, a pentamethylene group, a hexamethylene group, a heptamethylene group, an octamethylene group, a nonamethylene group, a decamethylene group, an undecamethylene group, a dodecamethylene group, a tridecamethylene group, and a tetradecamethylene group. A linear alkylene group having 2 to 12 carbon atoms is preferred.

Examples of the branched alkylene group having 3 to 20 carbon atoms, represented by Z include a 1-methylethylene group, a 2-methyltrimethylene group, a 2-methyltetramethylene group, a 2-methylpentamethylene group, a 3-methylhexamethylene group, a 4-methylheptamethylene group, a 4-methyloctamethylene group, a 5-methylnonamethylene group, a 5-methyldecamethylene group, a 6-methylundecamethylene group, a 7-methyldodecamethylene group, and a 7-methyltridecamethylene group. A branched alkylene group having 3 to 12 carbon atoms is preferred.

Examples of the linear alkenylene group having 3 to 20 carbon atoms, represented by Z include a propenylene group, a butenylene group, a hexenylene group, an octenylene group, and an octadecenylene group. A linear alkenylene group having 3 to 12 carbon atoms is preferred.

Examples of the branched alkenylene group having 3 to 20 carbon atoms, represented by Z include a 2-methylpropenylene group, a 2,2-dimethylbutenylene group, a 3-methyl-2-butenylene group, a 3-ethyl-2-butenylene group, a 2-methyloctenylene group, and a 2,4-dimethyl-2-butenylene group. A branched alkenylene group having 3 to 12 carbon atoms is preferred.

Examples of the linear halogen-substituted alkylene group having 1 to 20 carbon atoms, represented by Z include a dichloromethylene group, a chloromethylene group, a dichloromethylene group, and a tetrachloroethylene

group. A linear halogen-substituted alkylene group having 3 to 12 carbon atoms is preferred.

Examples of the branched halogen-substituted alkylene group having 1 to 20 carbon atoms, represented by Z include a 1,2-bischloromethylethylene group, a 2,2-bis(chloromethyl)propylene group, a 1,2-bisdichloromethylethylene group, a 1,2-bis(trichloromethyl)ethylene group, a 2,2-dichloropropylene group, a 1,1,2,2-tetrachloroethylene group, a 1-trifluoromethylethylene group, and a 1-pentafluorophenylethylene group. A branched halogen-substituted alkylene group having 3 to 12 carbon atoms is preferred.

Examples of the linear halogen-substituted alkenylene group having 1 to 20 carbon atoms, represented by Z include a dichloroethenylene group, a difluoroethenylene group, a 3,3-dichloropropenylene group, and a 1,2-difluoropropenylene group. A linear halogen-substituted alkenylene group having 3 to 12 carbon atoms is preferred.

Examples of the branched halogen-substituted alkylene group having 1 to 20 carbon atoms, represented by Z include a 3,4-dichloro-1,2-butylene group, a 2,2-dichloro-1,3-butylene group, and a 1,2-difluoro-1,2-propylene group. A branched halogen-substituted alkylene group having 3 to 12 carbon atoms is preferred.

Examples of the cycloalkylene group having 3 to 20 carbon atoms, represented by Z include a cyclopentylene group, a cyclohexylene group, a cyclopropylene group, a 2-methylcyclopropylene group, a cyclobutylene group, a 2,2-dimethylcyclobutylene group, a 2,3-dimethylcyclopentylene group, a 1,3,3-trimethylcyclohexylene group, and a cyclooctylene group. A cycloalkylene group having 3 to 12 carbon atoms is preferred.

Examples of the cycloalkenylene group having 3 to 20 carbon atoms, represented by Z include a cyclopentenylene group, a 2,4-cyclopentadienylene group, a cyclohexenylene group, a 1,4-cyclohexadienylene group, a cycloheptenylene group, a methylcyclopentenylene group, a methylcyclohexenylene group, a methylcycloheptenylene group, a dicyclodecylene group, and a tricyclodecylene group. A cycloalkenylene group having 3 to 12 carbon atoms is preferred.

Examples of the halogen-substituted cycloalkylene group having 3 to 20 carbon atoms, represented by Z include a 3-chloro-1,2-cyclopentylene group, a 3,4,5,6-tetrachloro-1,2-cyclohexylene group, a 3,3-dichloro-1,2-cyclopropylene group, a 2-chloromethylcyclopropylene group, a 3,4-dichloro-1,2-cyclobutylene group, a 3,3-bis(dichloromethyl)-1,2-cyclobutylene group, a 2,3-bis(dichloromethyl)cyclopentylene group, a 1,3,3-tris(fluoromethyl)-1,2-cyclohexylene group, and a 3-trichloromethyl-1,2-cyclooctylene group. A halogen-substituted cycloalkylene group having 3 to 12 carbon atoms is preferred.

Examples of the halogen-substituted cycloalkenylene group having 3 to 20 carbon atoms, represented by Z include a 5-chloro-1,2-cyclo-4-hexenylene group and a 3,3,4,4-tetrafluoro-1,2-cyclo-6-octenylene group. A halogen-substituted cycloalkenylene group having 3 to 12 carbon atoms is preferred.

Examples of the aromatic hydrocarbon group having 6 to 24 carbon atoms, represented by 2 include 1,2-phenylene, 3-methyl-1,2-phenylene, 3,6-dimethyl-1,2-phenylene, 1,2-naphthylene, 2,3-naphthylene, 5-methyl-1,2-naphthylene, 9,10-phenanthrylene, and 1,2-anthracenylene. An aromatic hydrocarbon group having 6 to 12 carbon atoms is preferred.

Examples of the halogen-substituted aromatic hydrocarbon group having 6 to 24 carbon atoms, represented by 2 include 3-chloro-1,2-phenylene, 3-chloromethyl-1,2-phenylene, 3,6-dichloro-1,2-phenylene, 3,6-dichloro-4,5-dimethyl-1,2-phenylene, 3-chloro-1,2-naphthylene, 3-fluoro-1,2-naphthylene, 3,6-dichloro-1,2-phenylene, 3,6-difluoro-1,2-phenylene, 3,6-dibromo-1,2-phenylene, 1-chloro-2,3-naphthylene, 5-chloro-1,2-naphthylene, 2,6-dichloro-9,10-phenanthrylene, 5,6-dichloro-1,2-anthracenylene, and 5,6-difluoro-1,2-anthracenylene. A halogen-substituted aromatic hydrocarbon group having 6 to 12 carbon atoms is preferred.

Examples of the nitrogen atom-containing hydrocarbon group having 1 to 24 carbon atoms, represented by Z include a 1-dimethylaminoethylene group, a 1,2-bisdimethylaminoethylene group, a 1-diethylaminoethylene group, a 2-diethylamino-1,3-propylene group, a 2-ethylamino-1,3-propylene group, a 4-dimethylamino-1,2-phenylene group, and a 4,5-bis(dimethylamino)phenylene group. A nitrogen atom-containing hydrocarbon group having 2 to 12 carbon atoms is preferred.

Examples of the oxygen atom-containing hydrocarbon group having 1 to 24 carbon atoms, represented by Z include a 1-methoxyethylene group, a 2,2-dimethoxy-1,3-propanylene group, a 2-ethoxy-1,3-propanylene group, a 2-t-butoxy-1,3-propanylene group, a 2,3-dimethoxy-2,3-butylene group, and a 4-methoxy-1,2-phenylene group. An oxygen atom-containing hydrocarbon group having 2 to 12 carbon atoms is preferred.

Examples of the phosphorus-containing hydrocarbon group having 1 to 24 carbon atoms, represented by Z include a 1-dimethylphosphinoethylene group, a 2,2-bis(dimethylphosphino)-1,3-propanylene group, a 2-diethylphosphino-1,3-propanylene group, a 2-t-butoxymethylphosphino-1,3-propanylene group, a 2,3-bis(diphenylphosphino)-2,3-butylene group, and a 4-methylphosphate-1,2-phenylene group. A phosphorus-containing hydrocarbon group having 1 to 12 carbon atoms is preferred.

As a specific example, the compound represented by the general formula (1) is particularly preferably (2-ethoxyethyl)methyl carbonate, (2-ethoxyethyl)ethyl carbonate, or (2-ethoxyethyl)phenyl carbonate.

Examples of the succinic acid diester compound (B) in the solid catalyst component for polymerization of an olefin according to the present invention include one or more selected from compounds represented by the following general formula (2):

[Formula 2]

$$\begin{array}{l} R^3-C-C(=O)OR^5 \\ \quad\;\; | \\ R^4-C-C(=O)OR^6 \end{array} \qquad (2)$$

wherein $R^3$ and $R^4$ are the same as or different from each other and are each a hydrogen atom or an alkyl group having 1 to 4 carbon atoms; and $R^5$ and $R^6$ are the same as or different from each other and are each a linear alkyl group or branched alkyl group having 2 to 4 carbon atoms.

In the compounds represented by the general formula (2), $R^3$ and $R^4$ are the same as or different from each other and are each a hydrogen atom or an alkyl group having 1 to 4 carbon atoms. Specific examples of the alkyl group having 1 to 4 carbon atoms, represented by $R^3$ or $R^4$ include a methyl group, ethyl, a n-propyl group, an isopropyl group, a n-butyl group, or an isobutyl group.

In the compounds represented by the general formula (2), $R^5$ and $R^6$ are the same as or different from each other and are each a linear alkyl group or branched alkyl group having 2 to 4 carbon atoms.

Specific examples of the linear alkyl group or branched alkyl group having 2 to 4 carbon atoms, represented by $R^5$ and $R^6$ include ethyl, a n-propyl group, an isopropyl group, a n-butyl group, or an isobutyl group.

In the solid catalyst component for polymerization of an olefin according to the present invention, the succinic acid diester compound (B) is not particularly limited as long as it is a succinic acid dialkyl ester represented by the general formula (2), and examples thereof include one or more selected from:

diethyl succinate, diethyl 2,3-dimethylsuccinate, diethyl 2,3-diethylsuccinate, diethyl 2,3-di-n-propylsuccinate, diethyl 2,3-diisopropylsuccinate, diethyl 2,3-di-n-butylsuccinate, and diethyl 2,3-diisobutylsuccinate;

di-n-propyl succinate, di-n-propyl 2,3-dimethysuccinate, di-n-propyl 2,3-diethylsuccinate, di-n-propyl 2,3-di-n-propylsuccinate, di-n-propyl 2,3-diisopropylsuccinate, di-n-propyl 2,3-di-n-butylsuccinate, and di-n-propyl 2,3-diisobutylsuccinate;

diisopropyl succinate, diisopropyl 2,3-dimethylsuccinate, diisopropyl 2,3-diethylsuccinate, diisopropyl 2,3-di-n-propylsuccinate, diisopropyl 2,3-diisopropylsuccinate, diisopropyl 2,3-di-n-butylsuccinate, and diisopropyl 2,3-diisobutylsuccinate;

di-n-butyl succinate, di-n-butyl 2,3-dimethylsuccinate, di-n-butyl 2,3-diethylsuccinate, di-n-butyl 2,3-di-n-propylsuccinate, di-n-butyl 2,3-diisopropylsuccinate, di-n-butyl 2,3-di-n-butylsuccinate, and di-n-butyl 2,3-diisobutylsuccinate; and

diisobutyl succinate, diisobutyl 2,3-dimethylsuccinate, diisobutyl 2,3-diethylsuccinate, diisobutyl 2,3-di-n-propylsuccinate, diisobutyl 2,3-diisopropylsuccinate, diisobutyl 2,3-di-n-butylsuccinate, and diisobutyl 2,3-diisobutylsuccinate.

Among them, diethyl succinate, di-n-propyl succinate, di-n-butyl succinate, diisobutyl succinate, diethyl 2,3-di-n-propylsuccinate, diethyl 2,3-diisopropylsuccinate, di-n-propyl 2,3-di-n-propylsuccinate, di-n-propyl 2,3-diisopropylsuccinate, diisopropyl 2,3-di-n-propylsuccinate, diisopropyl 2,3-diisopropylsuccinate, di-n-butyl 2,3-di-n-propylsuccinate, di-n-butyl 2,3-diisopropylsuccinate, diisobutyl 2,3-di-n-propylsuccinate, and diisobutyl 2,3-diisopropylsuccinate are preferably used.

The solid catalyst component for polymerization of an olefin according to the present invention contains electron-donating compounds of the ether carbonate compound (A) and the succinic acid diester compound (B) as essential components and may also contain another electron-donating compound (hereinafter, appropriately referred to as "electron-donating compound (D)") in addition to these electron-donating compounds.

Examples of such other electron-donating compound (D) includes acid halides, acid amides, nitriles, acid anhydrides, diether compounds, and carboxylic acid esters other than the diester compound (B) represented by the general formula (1).

Specific examples of such electron-donating compound (D) include one or more selected from: a carboxylic acid diester such as a cycloalkanedicarboxylic acid diester, a cycloalkenedicarboxylic acid diester, a malonic acid diester, an alkyl-substituted malonic acid diester, and a maleic acid diester; and a diether compound.

More specifically, one or more selected from a dialkylmalonic acid diester such as dimethyl diisobutylmalonate and diethyl diisobutylmalonate, a cycloalkanedicarboxylic acid diester such as dimethyl cyclohexane-1,2-dicarboxylate, and a 1,3-diether such as (isopropyl)(isopentyl)-1,3-dimethoxypropane and 9,9-bis(methoxymethyl)fluorene are more preferred.

Since the solid catalyst component for polymerization of an olefin according to the present invention has such other electron-donating compound together with the ether carbonate compound (A) and the succinic acid diester compound (B), the stereoregularity of a polymer of an olefin to be obtained in the polymerization can be easily improved, and the molecular weight distribution and the hydrogen responsiveness can be easily controlled in the ranges similar to those of a polymer produced using a solid catalyst containing a conventional phthalic acid ester as the electron-donating compound.

As described above, the solid catalyst component for polymerization of an olefin according to the present invention may contain a plurality of electron-donating compounds, and the ratio of the total content of the ether carbonate compound (A) and the succinic acid diester compound (B) to the whole content of the electron-donating compounds, represented the following expression is preferably 50 to 100% by mass, more preferably 80 to 100% by mass, further preferably 90 to 100% by mass:

{(content (g) of the ether carbonate compound (A) + content (g) of the succinic acid diester compound (B)) / whole content (g) of the electron-donating compounds} × 100.

When the solid catalyst component for polymerization of an olefin according to the present invention has the total content ratio of the ether carbonate compound (A) and the succinic acid diester compound (B) to the whole content of the electron-donating compounds in the range described above, a solid catalyst component for polymerization of an olefin which is capable of realizing the stereoregularity and wide molecular weight distribution of the resulting polymer, copolymerization activity, and block ratio of the resulting copolymer in a well-balanced manner while satisfying these properties at a level sufficient for practical use can be easily provided.

The solid catalyst component for polymerization of an olefin according to the present invention contains the ether carbonate compound (A) and the succinic acid diester compound (B) such that a molar ratio represented by the following expression is 0.01 to 1.00, preferably 0.05 to 1.00, more preferably 0.10 to 1.00:

content of the ether carbonate compound (A) / content of the succinic acid diester compound (B).

Since the solid catalyst component for polymerization of an olefin according to the present invention contains the ether carbonate compound (A) and the succinic acid diester compound (B) at the ratio described above, a solid catalyst component for polymerization of an olefin containing an electron-donating compound other than a phthalic acid ester, which is capable of realizing the stereoregularity and wide molecular weight distribution of the resulting polymer, copolymerization activity, and block ratio of the resulting copolymer in a well-balanced manner while satisfying these properties at a level sufficient for practical use, can be easily provided.

The solid catalyst component for polymerization of an olefin in the present invention may also contain polysiloxane (hereinafter, appropriately referred to as "polysiloxane (E)").

Since the solid catalyst component for polymerization of an olefin according to the present invention contain polysiloxane (E), the stereoregularity or the crystallinity of the resulting polymer can be easily improved, and a fine powder of the formed polymer can be easily reduced when an olefin is polymerized.

Polysiloxane is a polymer having a siloxane bond (-Si-O- bond) in the backbone. The polysiloxane, also called silicone oil, is chain, partially hydrogenated, cyclic, or modified polysiloxane that is liquid or viscous at ordinary temperature and has a viscosity of 0.02 to 100 $cm^2/s$ (2 to 10000 cSt), more preferably 0.03 to 5 $cm^2/s$ (3 to 500 cSt), at 25°C.

Examples of the chain polysiloxane include dimethylpolysiloxane and methylphenylpolysiloxane; examples of the partially hydrogenated polysiloxane include methyl hydrogen polysiloxane having a hydrogenation rate of 10 to 80%; and examples of the cyclic polysiloxane include one or more selected from hexamethylcyclotrisiloxane, octamethylcyclotetrasiloxane, decamethylcyclopentasiloxane, 2,4,6-trimethyl cyclotrisiloxane, and 2,4,6,8-tetramethylcyclotetrasiloxane.

The solid catalyst component for polymerization of an olefin according to the present invention is preferably a material including a magnesium compound (C), a titanium halogen compound (F), an ether carbonate compound (A), and a succinic acid diester compound (B), i.e., a product obtained by mutual contact of these compounds.

Examples of the magnesium compound (C) include one or more selected from magnesium dihalide, dialkyl magnesium, alkyl magnesium halide, dialkoxy magnesium, diaryloxy magnesium, alkoxy magnesium halide, and a fatty acid magnesium.

Among these magnesium compounds, magnesium dihalide, a mixture of magnesium dihalide and dialkoxy magnesium, and dialkoxy magnesium are preferred, and particularly dialkoxy magnesium is preferred. Specific examples thereof include one or more selected from: dimethoxy magnesium, diethoxy magnesium, dipropoxy magnesium, dibutoxy magnesium, ethoxymethoxy magnesium, ethoxypropoxy magnesium, and butoxyethoxy magnesium, and among them, diethoxy magnesium is particularly preferred.

The dialkoxy magnesium may be obtained by reacting metal magnesium with an alcohol in the presence of a halogen-containing organometal or the like.

Furthermore, the dialkoxy magnesium is in a granule form or a powder form and may have an indefinite shape or a spherical shape. In the case of using spherical dialkoxy magnesium, for example, a polymer powder having a more favorable particle shape and a narrow particle size distribution is easily obtained. The handleability of the polymer powder formed in polymerization operation is improved, and a problem such as a filter occlusion in an apparatus for separating a polymer attributed to a fine powder contained in the formed polymer powder can be easily solved.

The dialkyoxy magnesium may be used singly or in combination of two or more.

A method for producing such spherical dialkoxy magnesium is illustrated in, for example, Japanese Patent Laid-Open Nos. 58-4132, 62-51633, 3-74341, 4-368391, and 8-73388.

The magnesium compound (C) may be any of a magnesium compound solution or a magnesium compound suspension. The magnesium compound (C), when being solid, can be prepared into a magnesium compound solution by dissolving the magnesium compound (C) in a solvent having the ability to solubilize the magnesium compound (C), or can be prepared into a magnesium compound suspension by suspending the magnesium compound (C) in a solvent having no ability to solubilize the magnesium compound (C). The magnesium compound (C), when being a liquid, may be used directly as a magnesium compound solution, or may be used as a magnesium compound solution by further dissolving the liquid magnesium compound in a solvent having the ability to solubilize the magnesium compound.

The titanium halogen compound (F) is not particularly limited, and examples thereof include one or more selected from titanium tetrahalide and alkoxy titanium halide.

The titanium halogen compound (F) is preferably one compound selected from the group consisting of titanium tetrahalide or alkoxy titanium halide represented by the general formula:

$$Ti(OR^8)_iX_{4-i}$$

wherein $R^8$ represents a hydrocarbon group having 1 to 10 carbon atoms; X represents a halogen atom; and when a plurality of X are present, each X is the same as or different from each other; and i is an integer of 0 to 4.

Specific examples of the titanium halogen compound (F) include one or more selected from: titanium tetrahalide such as titanium tetrafluoride, titanium tetrachloride, titanium tetrabromide, and titanium tetraiodide; as alkoxy titanium halide, alkoxy titanium trihalide such as methoxy titanium trichloride, ethoxy titanium trichloride, propoxy titanium trichloride, and n-butoxy titanium trichloride; dialkoxy titanium dihalide such as dimethoxy titanium dichloride, diethoxy titanium dichloride, dipropoxy titanium dichloride, and di-n-butoxy titanium dichloride; and trialkoxy titanium halide such as trimethoxy titanium chloride, triethoxy titanium chloride, tripropoxy titanium chloride, and tri-n-butoxy titanium chloride.

Among them, a halogen-containing titanium compound is preferably used. Titanium tetrahalide such as titanium tetrachloride, titanium tetrabromide, and titanium tetraiodide is preferred. Titanium tetrachloride is more preferred. These titanium compounds may be diluted with a hydrocarbon compound, a halogenated hydrocarbon compound, or the like for use.

The solid catalyst component for polymerization of an olefin according to the present invention may include a halogen compound other than the titanium halogen compound (F) contacted on an as-needed basis. Examples of such a halogen compound include a tetravalent halogen-containing silicon compound, and more specifically, one or more selected from: silane tetrahalide such as tetrachlorosilane (silicon tetrachloride) and tetrabromosilane; and alkoxy group-containing halogenated silane such as methoxy trichlorosilane, ethoxy trichlorosilane, propoxy trichlorosilane, n-butoxy trichlorosilane, dimethoxy dichlorosilane, diethoxy dichlorosilane, dipropoxy dichlorosilane, di-n-butoxy dichlorosilane, trimethoxy chlorosilane, triethoxy chlorosilane, tripropoxy chlorosilane, and tri-n-butoxy chlorosilane.

The solid catalyst component for polymerization of an olefin according to the present invention is preferably prepared by contacting the magnesium compound (C), the titanium halogen compound (F), the ether carbonate compound (A), and the succinic acid diester compound (B) in the presence of an inert organic solvent.

In the present invention, the inert organic solvent is preferably an inert organic solvent that dissolves the titanium halogen compound (F) but does not dissolve the magnesium compound (C). Specific examples thereof include one or more selected from: a saturated hydrocarbon compound such as pentane, hexane, heptane, octane, nonane, decane, cyclohexane, methylcyclohexane, ethylcyclohexane, 1,2-diethylcyclohexane, methylcyclohexene, decalin, and mineral

oil; an aromatic hydrocarbon compound such as benzene, toluene, xylene, and ethylbenzene; and a halogenated hydrocarbon compound such as o-dichlorobenzene, methylene chloride, 1,2-dichlorobenzene, carbon tetrachloride, and dichloroethane.

As the inert organic solvent, a saturated hydrocarbon compound or an aromatic hydrocarbon compound that is liquid at ordinary temperature, having a boiling point of about 50 to 200°C, is preferably used. Among them, one or more selected from hexane, heptane, octane, ethyl cyclohexane, mineral oil, toluene, xylene, and ethyl benzene are preferred. One or more selected from hexane, heptane, ethyl cyclohexane, and toluene are particularly preferred.

Examples of a method for preparing the solid catalyst component for polymerization of an olefin according to the present invention include: a method for co-grinding a solid magnesium compound having no reducing properties, an ether carbonate compound (A), a succinic acid diester compound (B), and titanium halide; a method for contacting a halogenated magnesium compound having an adduct such as alcohol, an ether carbonate compound (A), a succinic acid diester compound (B), and titanium halide in the co-presence of an inert hydrocarbon solvent; a method for contacting dialkoxy magnesium, an ether carbonate compound (A), a succinic acid diester compound (B), and titanium halide in the co-presence of an inert hydrocarbon solvent; and a method for contacting a magnesium compound having reducing properties, an ether carbonate compound (A), a succinic acid diester compound (B), and titanium halide to precipitate a solid catalyst.

Examples of the solid catalyst component for polymerization of an olefin according to the present invention include a method for obtaining a target solid catalyst component for polymerization of an olefin by suspending a magnesium compound (C), a titanium halogen compound (F), an ether carbonate compound (A), and a succinic acid diester compound (B) in a hydrocarbon solvent, contacting them for a predetermined time while heating, then further adding the titanium halogen compound (F) to the resulting suspension, contacting them while heating to give a solid product, and washing the solid product with the hydrocarbon solvent.

The heating temperature is preferably 70 to 150°C, more preferably 80 to 120°C, further preferably 90 to 110°C.

The heating time is preferably 30 to 240 minutes, more preferably 60 to 180 minutes, further preferably 60 to 120 minutes.

The number of additions of the titanium halogen compound (F) to the suspension is not particularly limited.

In the case of adding the titanium halogen compound (F) to the suspension a plurality of times, each heating temperature can be set within the range described above, and the heating time for each addition can also be set within the range described above.

In addition to the ether carbonate compound (A) and the succinic acid diester compound (B), an electron-donating compound other than them may be used together in the preparation method described above. The contact may be performed in the co-presence of, for example, another reaction reagent of silicon, phosphorus, and aluminum, or a surfactant.

The content of the titanium atom, the magnesium atom, the halogen atom, the ether carbonate compound (A), and the succinic acid diester compound (B) contained in the solid catalyst component for polymerization of an olefin according to the present invention is not particularly limited as long as the content is such that the molar ratio represented by the content of the ether carbonate compound (A) / the content of the succinic acid diester compound (B) falls within the range described above.

The solid catalyst component for polymerization of an olefin according to the present invention contains preferably 0.2 to 10.0% by mass, more preferably 0.5 to 10.0% by mass, and further preferably 1.0 to 8.0% by mass of the ether carbonate compound (A) in the range of the content ratio described above.

The solid catalyst component for polymerization of an olefin according to the present invention contains preferably 0.2 to 20.0% by mass, more preferably 1.0 to 20.0% by mass, and further preferably 5.0 to 18.0% by mass of the succinic acid diester compound (B) in the range of the content ratio described above.

The solid catalyst component for polymerization of an olefin according to the present invention contains preferably 0.1 to 10.0% by mass, more preferably 0.5 to 8.0% by mass, and further preferably 1.0 to 8.0% by mass of titanium in terms of atomic weight.

The solid catalyst component for polymerization of an olefin according to the present invention contains preferably 10 to 70% by mass, more preferably 710 to 50% by mass, further preferably 15 to 40% by mass, and still further preferably 15 to 25% by mass of magnesium in terms of atomic weight.

The solid catalyst component for polymerization of an olefin according to the present invention contains preferably 20 to 90% by mass, more preferably 30 to 85% by mass, further preferably 40 to 80% by mass, and still further preferably 45 to 75% by mass of halogen in terms of atomic weight.

The solid catalyst component for polymerization of an olefin according to the present invention contains preferably 5 to 30% by mass, more preferably 5 to 25% by mass, and further preferably 5 to 20% by mass of the ether carbonate compound and the succinic acid diester compound (B) in total.

If the total amount of the ether carbonate compound (A) and the succinic acid diester compound (B) is less than 5% by mass, it is difficult to improve the polymerization activity and stereoregularity of the resulting polymer. If the

total amount exceeds 30% by mass, it is difficult to expand the molecular weight distribution of the resulting polymer.

In the present application, the percent contents of titanium and magnesium contained in the solid catalyst component for polymerization of an olefin mean values measured in accordance with a method (redox titration) described in JIS 8311-1997 "Method for determination of titanium in titanium ores".

In the present application, the content of halogen contained in the solid catalyst component for polymerization of an olefin means a value measured by a silver nitrate titration method which involves treating the solid catalyst component with a mixed solution of sulfuric acid and pure water to prepare an aqueous solution, then sampling a predetermined amount, and titrating halogen with a silver nitrate standard solution.

Furthermore, in the present application, the percent content of the electron-donating compound such as the ether carbonate compound (A) and the succinic acid diester compound (B) contained in the solid catalyst component for polymerization of an olefin means a value obtained by hydrolyzing the solid catalyst, then extracting an internal electron-donating compound with an aromatic solvent, and subjecting this solution to measurement by gas chromatography FID (flame ionization detector).

The present invention can easily provide a solid catalyst component for polymerization of an olefin containing an electron-donating compound other than a phthalic acid ester, which is capable of realizing the stereoregularity and wide molecular weight distribution of the resulting polymer, copolymerization activity, and block ratio of the resulting copolymer in a well-balanced manner while satisfying these properties at a level sufficient for practical use.

Next, the catalyst for polymerization of an olefin according to the present invention will be described.

The catalyst for polymerization of an olefin according to the present invention contains:

(I) the solid catalyst component for polymerization of an olefin according to any one of claims 1 to 3; and
(II) an organoaluminum compound represented by the following general formula (3):

$$R^7_pAlQ_{3-p} \quad (3)$$

wherein $R^7$ is an alkyl group having 1 to 6 carbon atoms; Q is a hydrogen atom or halogen; p is a real number of $0 < p \leq 3$; when a plurality of $R^7$ are present, each $R^7$ is the same as or different from each other; and when a plurality of Q are present, each Q is the same as or different from each other.

The catalyst for polymerization of an olefin according to the present invention preferably comprises:

(I) the solid catalyst component for polymerization of an olefin according to the present invention;
(II) an organoaluminum compound represented by the following general formula (3):

$$R^7_pAlQ_{3-p} \quad (3)$$

wherein $R^7$ is an alkyl group having 1 to 6 carbon atoms; Q is a hydrogen atom or halogen; p is a real number of $0 < p \leq 3$; when a plurality of $R^7$ are present, each $R^7$ is the same as or different from each other; and when a plurality of Q are present, each Q is the same as or different from each other; and
(III) an external electron-donating compound.

The details of (I) the solid catalyst component for polymerization of an olefin according to the present invention constituting the catalyst for polymerization of an olefin according to the present invention are as described above.

In the catalyst for polymerization of an olefin according to the present invention, (II) the organoaluminum compound is represented by the following general formula (3):

$$R^7_pAlQ_{3-p} \quad (3)$$

wherein $R^7$ is an alkyl group having 1 to 6 carbon atoms; Q is a hydrogen atom or halogen; p is a real number of $0 < p \leq 3$; when a plurality of $R^7$ are present, each $R^7$ is the same as or different from each other; and when a plurality of Q are present, each Q is the same as or different from each other.

Specific examples of such (II) organoaluminum compound include one or more selected from: trialkyl aluminum such as triethyl aluminum, triisopropyl aluminum, tri-n-butyl aluminum, tri-n-hexyl aluminum, and triisobutyl aluminum; alkylaluminum halide such as diethylaluminum chloride and diethylaluminum bromide; and diethylaluminum hydride. One or more selected from alkylaluminum halide such as diethylaluminum chloride and trialkyl aluminum such as triethyl aluminum, tri-n-butyl aluminum, and triisobutyl aluminum are preferred, and one or more selected from triethyl aluminum and triisobutyl aluminum are more preferred.

Examples of (III) the external electron-donating compound constituting the catalyst for polymerization of an

olefin according to the present invention include a compound represented by the following general formula (4) :

$$R^9{}_rSi(NR^{10}R^{11})_s(OR^{12})_{4-(r+s)} \qquad (4)$$

wherein r is an integer of 0 or 1 to 2; s is an integer of 0 or 1 to 2; r+s is an integer of 0 or 1 to 4; $R^9$, $R^{10}$, or $R^{11}$ is a hydrogen atom or a group selected from a linear or branched alkyl group having 1 to 12 carbon atoms, a substituted or unsubstituted cycloalkyl group, a phenyl group, an allyl group, and an aralkyl group, optionally contains a hetero atom, and is the same as or different from each other; $R^{10}$ and $R^{11}$ are optionally bonded to each other to form a ring; $R^9$, $R^{10}$, and $R^{11}$ are the same as or different from each other; and $R^{12}$ is a group selected from an alkyl group having 1 to 4 carbon atoms, a cycloalkyl group, a phenyl group, a vinyl group, an allyl group, and an aralkyl group, and optionally contains a hetero atom.

In the compound represented by the general formula (4), $R^9$ is a hydrogen atom or a group selected from a linear or branched alkyl group having 1 to 12 carbon atoms, a substituted or unsubstituted cycloalkyl group, a phenyl group, an allyl group, and an aralkyl group, and optionally contains a hetero atom.

$R^9$ is preferably a linear or branched alkyl group having 1 to 10 carbon atoms or a cycloalkyl group having 5 to 8 carbon atoms, particularly preferably a linear or branched alkyl group having 1 to 8 carbon atoms or a cycloalkyl group having 5 to 8 carbon atoms.

In the compound represented by the general formula (4), $R^{10}$ or $R^{11}$ is a hydrogen atom or a group selected from a linear or branched alkyl group having 1 to 12 carbon atoms, a substituted or unsubstituted cycloalkyl group, a phenyl group, an allyl group, and an aralkyl group, and optionally contains a hetero atom.

$R^{10}$ or $R^{11}$ is preferably a linear or branched alkyl group having 1 to 10 carbon atoms or a cycloalkyl group having 5 to 8 carbon atoms, particularly preferably a linear or branched alkyl group having 1 to 8 carbon atoms or a cycloalkyl group having 5 to 8 carbon atoms.

$R^{10}$ and $R^{11}$ are optionally bonded to each other to form a ring. In this case, ($NR^6R^7$) that forms a ring is preferably a perhydroquinolino group or a perhydroisoquinolino group.

In the compound represented by the general formula (4), $R^9$, $R^{10}$ and $R^{11}$ are the same as or different from each other.

In the compound represented by the general formula (4), $R^{12}$ is a group selected from an alkyl group having 1 to 4 carbon atoms, a cycloalkyl group, a phenyl group, an allyl group, and an aralkyl group, and optionally contains a hetero atom.

$R^{12}$ is preferably a linear or branched alkyl group having 1 to 4 carbon atoms.

Specific examples of the compound represented by the general formula (4) include one or more organosilicon compounds selected from phenylalkoxysilane, alkylalkoxysilane, phenylalkylalkoxysilane, cycloalkylalkoxysilane, cycloalkylalkylalkoxysilane, (alkylamino)alkoxysilane, alkyl(alkylamino)alkoxysilane, alkyl(alkylamino)silane, and alkylaminosilane.

Examples of the compound in which s is 0 in the general formula (4) particularly preferably include one or more organosilicon compounds selected from di-n-propyldimethoxysilane, diisopropyldimethoxysilane, di-n-butyldimethoxysilane, diisobutyldimethoxysilane, di-t-butyldimethoxysilane, t-butylmethyldimethoxysilane, t-butylethyldimethoxysilane, di-n-butyldiethoxysilane, t-butyltrimethoxysilane, t-butyltriethoxysilane, dicyclohexyldimethoxysilane, dicyclohexyldiethoxysilane, cyclohexylmethyldimethoxysilane, cyclohexylmethyldiethoxysilane, cyclohexylethyldimethoxysilane, cyclohexylethyldiethoxysilane, dicyclopentyldimethoxysilane, dicyclopentyldiethoxysilane, cyclopentylmethyldimethoxysilane, cyclopentylmethyldiethoxysilane, cyclopentylethyldiethoxysilane, cyclohexylcyclopentyldimethoxysilane, cyclohexylcyclopentyldiethoxysilane, 3-methylcyclohexylcyclopentyldimethoxysilane, 4-methylcyclohexylcyclopentyldimethoxysilane, and 3,5-dimethylcyclohexylcyclopentyldimethoxysilane.

Examples of the compound in which s is 1 or 2 in the general formula (4) include one or more organosilicon compounds selected from di(alkylamino)dialkoxysilane, (alkylamino)(cycloalkylamino)dialkoxysilane, (alkylamino)(alkyl)dialkoxysilane, di(cycloalkylamino)dialkoxysilane, vinyl(alkylamino)dialkoxysilane, allyl(alkylamino)dialkoxysilane, (alkoxyamino)trialkoxysilane, (alkylamino)trialkoxysilane, and (cycloalkylamino)trialkoxysilane, and particularly preferably include ethyl(t-butylamino)dimethoxysilane, cyclohexyl(cyclohexylamino)dimethoxysilane, ethyl(t-butylamino)dimethoxysilane, bis(cyclohexylamino)dimethoxysilane, bis(perhydroisoquinolino)dimethoxysilane, bis(perhydroquinolino)dimethoxysilane, ethyl(isoquinolino)dimethoxysilane, diethylaminotrimethoxysilane, and diethylaminotriethoxysilane. Among them, the compound is one or more organosilicon compounds selected from bis(perhydroisoquinolino)dimethoxysilane, diethylaminotrimethoxysilane, or diethylaminotriethoxysilane.

Two or more compounds represented by the general formula (4) may be used in combination.

The catalyst for polymerization of an olefin according to the present invention is a material comprising (I) the solid catalyst component for polymerization of an olefin according to the present invention, (II) the organoaluminum compound represented by the general formula (3), and (III) the external electron-donating compound, i.e., a contact product thereof.

The catalyst for polymerization of an olefin according to the present invention may be prepared by contacting (I) the solid catalyst component for polymerization of an olefin according to the present invention, (II) the organoaluminum compound represented by the general formula (3), and (III) the external electron-donating compound in the absence of olefins, or in the presence of olefins (in a polymerization system) as described later.

The content ratio of each component in the catalyst for polymerization of an olefin according to the present invention is arbitrary and not particularly limited as long as it does not affect the advantages of the present invention, but usually, the catalyst for polymerization of an olefin according to the present invention contains preferably 1 to 2,000 mol and more preferably 50 to 1,000 mol of (II) the organoaluminum compound per mol of a titanium atom in (I) the solid catalyst component for polymerization of an olefin. The catalyst for polymerization of an olefin according to the present invention contains preferably 0.002 to 10 mol, more preferably 0.01 to 2 mol, and further preferably 0.01 to 0.5 mol of (III) the external electron-donating compound per mol of (II) the organoaluminum compound.

According to the present invention, it is considered that by containing the ether carbonate compound (A) or the succinic acid diester compound (B) at a certain quantitative ratio, the ether carbonate compound (A) and the succinic acid diester compound (B) are selectively adsorbed on an optimal surface site where the performance thereof is easy to be exhibited, the performance of the two internal electron-donating compounds are both effectively expressed, and the polymer grows at different growth rates from the active point at the site where these two internal electron-donating compounds are adsorbed.

Therefore, it is considered that the present invention can provide a catalyst for polymerization of an olefin which is capable of realizing the stereoregularity and wide molecular weight distribution of the resulting polymer, copolymerization activity, and block ratio of the resulting copolymer in a well-balanced manner while satisfying these properties at a level sufficient for practical use despite containing an electron-donating compound other than a phthalic acid ester.

Next, the method for producing a polymer of an olefin according to the present invention will be described.

The method for producing a polymer of an olefin according to the present invention comprises polymerizing an olefin in the presence of the catalyst for polymerization of an olefin according to the present invention.

In the method for producing a polymer of an olefin according to the present invention, the olefin may be polymerized by homopolymerization or copolymerization with other $\alpha$-olefins.

In the method for producing a polymer of an olefin according to the present invention, examples of an olefin to be polymerized include one or more selected from ethylene, propylene, 1-butene, 1-pentene, 4-methyl-1-pentene, and vinylcyclohexane. Among them, one or more selected from ethylene, propylene, and 1-butene are preferred, and propylene is more preferred.

When the olefin is propylene, propylene may be homopolymerized, or copolymerized with other $\alpha$-olefins.

Examples of the olefins to be copolymerized with propylene include one or more selected from ethylene, 1-butene, 1-pentene, 4-methyl-1-pentene, and vinylcyclohexane.

When the catalyst for polymerization of an olefin according to the present invention is prepared in the presence of olefins (in a polymerization system), the ratio of the amount of the components used is arbitrary and not particularly limited as long as it does not affect the advantages of the present invention. In usual cases, preferably 1 to 2,000 mol and more preferably 50 to 1,000 mol of (II) the organoaluminum compound described above is contacted with 1 mol of a titanium atom in (I) the solid catalyst component for polymerization of an olefin described above. In addition, preferably 0.002 to 10 mol, more preferably 0.01 to 2 mol, and further preferably 0.01 to 0.5 mol of (III) the external electron-donating compound described above is contacted with 1 mol of (II) the organoaluminum compound.

The order of contact of each component constituting the catalyst for polymerization of an olefin is arbitrary, but it is preferable that (II) the organoaluminum compound was introduced into the polymerization system, (III) the external electron-donating compound was then introduced thereinto to be contacted therewith, followed by introducing (I) the solid catalyst component for polymerization of an olefin thereinto to be contacted therewith.

The method for producing a polymer of an olefin according to the present invention may be performed in the presence or absence of an organic solvent.

Furthermore, olefin monomers such as propylene may be used in any of the gas and liquid states. The polymerization temperature is preferably 200°C or lower, more preferably 100°C or lower, and the polymerization pressure is preferably 10 MPa or lower, more preferably 5 MPa or lower. Any of a continuous polymerization method and a batch polymerization method may be employed for polymerization of an olefin. The polymerization reaction may be performed by one stage or may be performed by two or more stages.

In addition, for the polymerization of olefins using the catalyst for polymerization of an olefin according to the present invention (also referred to as the main polymerization), pre-polymerization is preferably performed before the main polymerization in order to further improve the catalyst activity, stereoregularity, and particle properties or the like of the resulting polymer. Monomers such as olefins similar to those used in the main polymerization or styrene may be used for the pre-polymerization.

For the pre-polymerization, the order of contact of each component constituting the catalyst for polymerization of an olefin and monomers (olefins) is arbitrary. Preferably, (II) the organoaluminum compound is first introduced into a

pre-polymerization system set to an inert gas atmosphere or an olefin gas atmosphere, and subsequently, (I) the solid catalyst component for polymerization of an olefin according to the present invention is introduced thereinto to be contacted therewith, then an olefin such as propylene alone or a mixture of an olefin such as propylene and one or more other olefins is contacted therewith.

In the pre-polymerization, when (III) the external electron-donating compound is also introduced into the pre-polymerization system, it is preferable that (II) the organoaluminum compound is first introduced into a pre-polymerization set to an inert gas atmosphere or an olefin gas atmosphere, and subsequently, (III) the external electron-donating compound is introduced thereinto to be contacted therewith, (I) the solid catalyst component for polymerization of an olefin according to the present invention is further contacted therewith, and then an olefin such as propylene alone or a mixture of an olefin such as propylene and one or more other olefins is contacted therewith.

In the method for producing a polymer of an olefin according to the present invention, examples of the polymerization method include a slurry polymerization method using a solvent of an inert hydrocarbon compound such as cyclohexane or heptane, a bulk polymerization method using a solvent such as liquefied propylene, and a vapor-phase polymerization method substantially using no solvent. A bulk polymerization method or a vapor-phase polymerization method is preferred.

In the case of copolymerizing propylene with another α-olefin monomer, random copolymerization which involves polymerizing propylene and a small amount of ethylene as comonomers by one stage, or so-called propylene-ethylene block copolymerization which involves homopolymerizing propylene at a first stage (first polymerization vessel), and copolymerizing propylene with another α-olefin such as ethylene by a second stage (second polymerization vessel) or a higher multiple stages (multistage polymerization vessel) is typical. The block copolymerization of propylene with another α-olefin is preferred.

The block copolymer obtained by the block copolymerization is a polymer comprising continuously varying segments of two or more monomer compositions and refers to a form in which two or more types of polymer chains (segments) differing in polymer primary structure such as monomer species, comonomer species, comonomer composition, comonomer contents, comonomer sequences, or stereoregularity are connected in one molecule.

In the method for producing a polymer of an olefin according to the present invention, the block copolymerization reaction of propylene with another α-olefin can usually be carried out by using propylene alone or contacting propylene with a small amount of α-olefin (ethylene, etc.) in the presence of the catalyst for polymerization of an olefin according to the present invention at a previous stage, and subsequently contacting propylene with α-olefin (ethylene, etc.) at a later stage. The polymerization reaction at the previous stage may be carried out repetitively plural times, or the polymerization reaction at the later stage may be carried out repetitively plural times through multistage reaction.

Specifically, it is preferred that the block copolymerization reaction of propylene with another α-olefin involves performing polymerization at the previous stage by using a polymerization temperature and time adjusted such that the ratio of a polypropylene moiety (to a copolymer to be finally obtained) is 20 to 90% by mass, and subsequently performing polymerization at the later stage by introducing propylene and ethylene or a different α-olefin such that the ratio of a rubber moiety such as ethylene-propylene rubber (EPR) (to the copolymer to be finally obtained) is 10 to 80% by mass.

For both the previous stage and the later stage, the polymerization temperature is preferably 200°C or lower, more preferably 100°C or lower, further preferably 75 to 80°C, and the polymerization pressure is preferably 10 MPa or lower, more preferably 6 MPa or lower, further preferably 5 MPa or lower.

For the copolymerization reaction as well, any of a continuous polymerization method and a batch polymerization method can be adopted, and the polymerization reaction may be performed by one stage or may be performed by two or more stages.

The polymerization time (residence time in a reactor) is preferably 1 minute to 5 hours for the respective polymerization stages of the previous and later polymerization stages, or for continuous polymerization.

Examples of the polymerization method include a slurry polymerization method using a solvent of an inert hydrocarbon compound such as cyclohexane or heptane, a bulk polymerization method using a solvent such as liquefied propylene, and a vapor-phase polymerization method substantially using no solvent. A bulk polymerization method or a vapor-phase polymerization method is preferred. The reaction at the later stage is generally preferably a vapor-phase polymerization reaction for the purpose of suppressing the elution of EPR from PP particles.

The present invention can provide a method for easily producing a polymer of an olefin that satisfies stereoregularity, wide molecular weight distribution, copolymerization activity, and block ratio of the copolymer in a well-balanced manner at a level sufficient for practical use.

[Examples]

Next, the present invention will be described further specifically with reference to Examples. However, these examples are given merely for illustration and do not limit the present invention.

(Example 1)

1. Synthesis of solid catalyst component

A 200 ml round-bottom flask equipped with a stirrer and sufficiently purged with nitrogen gas was charged with 10 g (87.4 mmol) of diethoxy magnesium, 3.0 ml (11.2 mmol) of diethyl 2,3-diisopropylsuccinate, and 50 ml of toluene to prepare a suspension.

Subsequently, the suspension was added to a mixed solution of 70 ml of toluene and 30 ml of titanium tetrachloride that had been preloaded into a 500 ml round-bottom flask equipped with a stirrer and sufficiently purged with nitrogen gas.

Subsequently, 0.25 ml (1.6 mmol) of (2-ethoxyethyl)ethyl carbonate (molecular weight: 162.18, specific gravity: 1.011) and 3.0 ml (11.2 mmol) of diethyl 2,3-diisopropylsuccinate (molecular weight: 258.35, specific gravity: 0.963) were added thereto, the temperature was increased to 100°C with stirring, the suspension was heated to 100°C, and a reaction treatment was then conducted at 100°C for 90 minutes with stirring. Thereafter, the reaction product was washed four times with 75 ml of toluene at 100°C.

Next, 100 ml of a 10% by volume titanium tetrachloride solution in toluene was added thereto, and the temperature was increased to 100°C with stirring. After the mixture was reacted at 100°C for 15 minutes, the product was washed with 100 ml of toluene at 100°C once. This procedure was performed three times, and the resultant was further washed with 75 ml of n-heptane at 40°C for 6 times to give a solid catalyst component.

Solid in this solid catalyst component was separated from the liquid, and the content of titanium, the content of (2-ethoxyethyl)ethyl carbonate, and the content of diisopropyl succinate in the obtained solid component were measured to be 3.85% by mass, 1.88% by mass, and 16.64% by mass, respectively. Furthermore, the molar ratio represented by the content of (2-ethoxyethyl)ethyl carbonate / the content of diethyl 2,3-diisopropylsuccinate was 0.18.

The content of titanium, the content of (2-ethoxyethyl)ethyl carbonate corresponding to the ether carbonate compound (A), and the content of diisopropyl succinate corresponding to the succinic acid diester compound (B) in the solid component were measured as follows.

<Content of titanium in solid component>

The content of titanium in the solid component was measured in accordance with a method described in JIS M 8301.

<Content of electron-donating compound (ether carbonate compound (A), succinic acid diester compound (B)) in solid component>

The content of the electron-donating compound was determined by the measurement using gas chromatography (manufactured by Shimadzu Corporation) under the following conditions. The number of moles of each component was determined from the results of the measurement of the gas chromatography using a calibration curve measured in advance on the basis of known concentrations.

(Measurement conditions)

· Column: packed column (ϕ2.6 × 2.1 m, Silicone SE-30 10%, Chromosorb WAW DMCS 80/100, manufactured by GL Sciences Inc.)
· Detector: FID (flame ionization detector)
· Carrier gas: helium, flow rate of 40 ml/min
· Measurement temperature: vaporizing chamber: 280°C, column: 225°C, detector: 280°C

2. Formation and polymerization reaction of polymerization catalyst

An autoclave having an internal volume of 2.0 L with a stirrer thoroughly purged with nitrogen gas was charged with 1.32 mmol of triethyl aluminum, 0.13 mmol of dicyclopentyldimethoxysilane (DCPDMS), and 0.0026 mmol of the solid catalyst component as a titanium atom to form a catalyst for polymerization. Thereafter, the autoclave was charged with 1.5 L of hydrogen gas and 1.4 L of liquefied propylene, and pre-polymerization was performed at 20°C for 5 minutes and then heated, and the polymerization reaction was performed at 70°C for 1 hour.

The polymerization activity per g of the solid catalyst component, the bulk density (BD) of the polymer, the ratio

of p-xylene solubles (XS) in the polymer, the melt rheology (MFR) of the polymer, and the molecular weight distribution (Mw/Mn) of the polymer, in this case, were measured by the following methods. The results are shown in Table 1.

<Polymerization activity per g of solid catalyst component>

The polymerization activity per g of the solid catalyst component was determined according to the following expression:

Polymerization activity (g-pp/g-catalyst) = mass (g) of the polymer / mass (g) of the solid catalyst component.

<Bulk density (BD) of polymer>

The bulk density (BD) of the polymer was measured in accordance with JIS K 6721.

<Melt rheology (MFR) of polymer>

The melt flow rate (MFR) (g/10 min) indicating the melt rheology of the polymer was measured in accordance with ASTM D 1238 and JIS K 7210.

<Ratio of p-xylene soluble (XS) in polymer>

A flask equipped with a stirring apparatus was charged with 4.0 g of the polymer (polypropylene) and 200 ml of p-xylene, and the outside temperature was set to the boiling point or higher (approximately 150°C) of xylene, thereby dissolving the polymer over 2 hours while keeping the temperature of p-xylene inside the flask at the boiling point (137 to 138°C). Then, the liquid temperature was cooled to 23°C over 1 hour, and an insoluble component and a soluble component were separated by filtration. The solution of the soluble component was collected, and p-xylene was distilled off by heating and drying under reduced pressure. The weight of the obtained residue was determined, and a relative ratio (% by mass) to the formed polymer (polypropylene) was calculated and used for xylene soluble (XS).

<Molecular weight distribution of polymer>

The molecular weight distribution of the polymer was evaluated by Mw/Mn, the ratio of weight average molecular weight Mw to number average molecular weight Mn, which was determined by the measurement using gel permeation chromatography (GPC) (GPCV2000 mad by Waters) under the following conditions.

Solvent: o-dichlorobenzene (ODCB)
Temperature: 140°C (SEC)
Column: Shodex GPC UT-806M
Concentration of sample: 1 g/liter-ODCB (50 mg/50 ml-ODCB)
Injection volume: 0.5 ml
Flow rate: 1.0 ml/min

3. Copolymerization reaction

An autoclave having an internal volume of 2.0 L with a stirrer thoroughly purged with nitrogen gas was charged with 2.4 mmol of triethyl aluminum, 0.24 mmol of dicyclopentyldimethoxysilane (DCPDMS, and 0.003 mmol of the solid catalyst component in terms of a titanium atom to prepare a propylene block copolymerization catalyst.

In the presence of the propylene block copolymerization catalyst, the autoclave was further charged with 15 mol of liquefied propylene and 0.20 MPa (partial pressure) of hydrogen gas, and pre-polymerization was performed at 20°C for 5 minutes. Then, the homo-propylene (homo-stage) polymerization reaction at the first stage was performed at 70°C for 75 minutes. After completion of the homo-stage polymerization, the monomer was purged while the temperature of the reactor was lowered to room temperature. After that, the weight of the entire autoclave was measured to determine the amount of polymerization in the preceding stage from the difference with the weight previously weighed

before the start of polymerization. After a portion of the polymer was sampled for MFR measurement under nitrogen, the monomer supply line or the like was connected again. Ethylene/propylene/hydrogen were put into the autoclave with a stirrer such that the ethylene/propylene/hydrogen molar ratio was 1.0/1.0/0.043. Then, the autoclave was heated to 70°C, and ethylene/propylene/hydrogen were polymerized under conditions of 1.2 MPa, 70°C, and 1 hour while introduced such that the ethylene/propylene/hydrogen ratio was at 2/2/0.086 in terms of L/min to obtain an ethylene-propylene copolymer.

The ethylene-propylene block copolymerization activity (ICP activity), block ratio (CV), and percent EPR content of the obtained ethylene-propylene copolymer were measured by the following methods. The results are shown in Table 1.

<Ethylene-propylene block copolymerization activity (ICP activity) (g-ICP/(g-cat))>

The ethylene-propylene block copolymerization activity (ICP activity) during the ethylene-propylene block copolymerization per g of the solid catalyst component was calculated according to the following expression:

ICP activity (g-ICP/g-cat) = (I + J - F) / (mass (g) of the solid catalyst component contained in the catalyst for ethylene-propylene copolymerization)

wherein F represents the mass (g) of the autoclave, I represents the mass (g) of the autoclave after the completion of the copolymerization reaction, and J represents the amount (g) of the aliquot of the polymer extracted after the homopolymerization.

<Block ratio (CV)>

The block ratio (CV) of the ethylene-propylene copolymer was determined according to the following expression:

$$\text{Block ratio (\% by mass)} = \{(I - G + J) / (I - F)\} \times 100$$

wherein F represents the mass (g) of the autoclave, G represents the mass (g) of the autoclave after the removal of unreacted monomers after the completion of the polymerization at the first stage (homo stage), I represents the mass (g) of the autoclave after the completion of the copolymerization reaction, and J represents the amount (g) of the aliquot of the polymer extracted after the homopolymerization.

<Percent EPR content (xylene-soluble content in ethylene-propylene block copolymer)>

A flask equipped with a stirring apparatus was charged with 5.0 g of the copolymer (ethylene-propylene block copolymer) and 250 ml of p-xylene, and the outside temperature was set to the boiling point or higher (approximately 150°C) of xylene, thereby dissolving the polymer over 2 hours while keeping the temperature of p-xylene inside the flask at the boiling point (137 to 138°C). Then, the liquid temperature was cooled to 23°C over 1 hour, and xylene solubles (EPR) and xylene insolubles (XI) were separated by filtration.

The solubles were collected, together with the solution, and p-xylene was distilled off by heating and drying under reduced pressure. The weight of the obtained residue was determined, and a relative ratio (% by mass) to the formed polymer (ethylene-propylene block copolymer) was calculated and used as the percent EPR content.

(Example 2)

A solid catalyst component was prepared in the same way as in Example 1, except that in "1. Synthesis of solid catalyst component" in Example 1, 10 g (87.4 mmol) of diethoxy magnesium, 2.0 ml (7.3 mmol) of diethyl 2,3-diisopropylsuccinate (molecular weight: 258.35, specific gravity: 0.963), and 50 ml of toluene were introduced instead of 10 g (87.4 mmol) of diethoxy magnesium, 3 ml (11.2 mmol) of diethyl 2,3-diisopropylsuccinate, and 50 ml of toluene; and 0.6 ml (3.8 mmol) of (2-ethoxyethyl)ethyl carbonate (molecular weight: 162.18, specific gravity: 1.011) and 2.6 ml (9.5 mmol) of diethyl 2,3-diisopropylsuccinate (molecular weight: 258.35, specific gravity: 0.963) were added instead of adding 0.25

ml (1.6 mmol) of (2-ethoxyethyl)ethyl carbonate and 3.0 ml (11.2 mmol) of diethyl 2,3-diisopropylsuccinate.

The content of titanium, the content of (2-ethoxyethyl)ethyl carbonate, and the content of diethyl 2,3-diisopropylsuccinate in the obtained solid catalyst component were measured to be 3.26% by mass, 5.46% by mass, and 12.65% by mass, respectively. Furthermore, the molar ratio represented by the content of (2-ethoxyethyl)ethyl carbonate / the content of diethyl 2,3-diisopropylsuccinate was 0.69.

Next, the formation and polymerization of a polymerization catalyst were performed in the same method as in "2. Formation and polymerization of polymerization catalyst" in Example 1, except that the solid catalyst component was used. The polymerization activity per g of the solid catalyst component, the bulk density (BD) of the polymer, the ratio of p-xylene solubles (XS) in the polymer, the melt rheology (MFR) of the polymer, and the molecular weight distribution (Mw/Mn) of the polymer, in this case, were measured in the same method as in Example 1. The results are shown in Table 1.

Furthermore, the copolymerization reaction was performed in the same method as in "3. Copolymerization reaction" in Example 1. The ethylene-propylene block copolymerization activity (ICP activity), block ratio (CV), and percent EPR content, in this case, were measured in the same method as in Example 1. The results are shown in Table 1.

(Example 3)

A solid catalyst component was prepared in the same way as in Example 1, except that in "1. Synthesis of solid catalyst component" in Example 1, 10 g (87.4 mmol) of diethoxy magnesium, 2.8 ml (10.2 mmol) of diethyl 2,3-diisopropylsuccinate (molecular weight: 258.35, specific gravity: 0.963), and 50 ml of toluene were introduced instead of 10 g (87.4 mmol) of diethoxy magnesium, 3 ml (11.2 mmol) of diethyl 2,3-diisopropylsuccinate, and 50 ml of toluene; and 1.0 ml (6.4 mmol) of (2-ethoxyethyl)ethyl carbonate (molecular weight: 162.18, specific gravity: 1.011) and 2.8 ml (10.2 mmol) of diethyl 2,3-diisopropylsuccinate (molecular weight: 258.35, specific gravity: 0.963) were added instead of adding 0.25 ml (1.6 mmol) of (2-ethoxyethyl)ethyl carbonate and 3.0 ml (11.2 mmol) of diethyl 2,3-diisopropylsuccinate.

The content of titanium, the content of (2-ethoxyethyl)ethyl carbonate, and the content of diethyl 2,3-diisopropylsuccinate in the obtained solid catalyst component were measured to be 3.60% by mass, 7.18% by mass, and 14.17% by mass, respectively. Furthermore, the molar ratio represented by the content of (2-ethoxyethyl)ethyl carbonate / the content of diethyl 2,3-diisopropylsuccinate was 0.81.

Next, the formation and polymerization of a polymerization catalyst were performed in the same method as in "2. Formation and polymerization of polymerization catalyst" in Example 1, except that the solid catalyst component was used. The polymerization activity per g of the solid catalyst component, the bulk density (BD) of the polymer, the ratio of p-xylene solubles (XS) in the polymer, the melt rheology (MFR) of the polymer, and the molecular weight distribution (Mw/Mn) of the polymer, in this case, were measured in the same method as in Example 1. The results are shown in Table 1.

Furthermore, the copolymerization reaction was performed in the same method as in "3. Copolymerization reaction" in Example 1. The ethylene-propylene block copolymerization activity (ICP activity), block ratio (CV), and percent EPR content, in this case, were measured in the same method as in Example 1. The results are shown in Table 1.

(Comparative Example 1)

A solid catalyst component was prepared in the same way as in Example 1, except that in "1. Synthesis of solid catalyst component" in Example 1, 0.25 ml (1.6 mmol) of (2-ethoxyethyl)ethyl carbonate was not added. The content of titanium and the content of diethyl 2,3-diisopropylsuccinate in the obtained solid catalyst component were measured to be 3.91% by mass and 16.36% by mass, respectively. Furthermore, the molar ratio represented by the content of (2-ethoxyethyl)ethyl carbonate / the content of diethyl 2,3-diisopropylsuccinate was 0.

Next, the formation and polymerization of a polymerization catalyst were performed in the same method as in "2. Formation and polymerization of polymerization catalyst" in Example 1, except that the solid catalyst component was used. The polymerization activity per g of the solid catalyst component, the bulk density (BD) of the polymer, the ratio of p-xylene solubles (XS) in the polymer, the melt rheology (MFR) of the polymer, and the molecular weight distribution (Mw/Mn) of the polymer, in this case, were measured in the same method as in Example 1. The results are shown in Table 1.

Furthermore, the copolymerization reaction was performed in the same method as in "3. Copolymerization reaction" in Example 1. The ethylene-propylene block copolymerization activity (ICP activity), block ratio (CV), and percent EPR content, in this case, were measured in the same method as in Example 1. The results are shown in Table 1.

(Comparative Example 2)

A solid catalyst component was prepared in the same way as in Example 1, except that in "1. Synthesis of solid

catalyst component" in Example 1, (2-ethoxyethyl)ethyl carbonate was added instead of diethyl 2,3-diisopropylsuccinate in an equimolar amount.

The content of titanium and the content of (2-ethoxyethyl)ethyl carbonate in the obtained solid catalyst component were measured to be 1.71% by mass and 7.96% by mass, respectively.

Next, the formation and polymerization of a polymerization catalyst were performed in the same method as in "2. Formation and polymerization of polymerization catalyst" in Example 1, except that the solid catalyst component was used. The polymerization activity per g of the solid catalyst component, the bulk density (BD) of the polymer, the ratio of p-xylene solubles (XS) in the polymer, the melt rheology (MFR) of the polymer, and the molecular weight distribution (Mw/Mn) of the polymer, in this case, were measured in the same method as in Example 1. The results are shown in Table 1.

Furthermore, the copolymerization reaction was performed in the same method as in "3. Copolymerization reaction" in Example 1. The ethylene-propylene block copolymerization activity (ICP activity), block ratio (CV), and percent EPR content, in this case, were measured in the same method as in Example 1. The results are shown in Table 1.

[Table 1]

| | Propylene polymerization activity (g-pp/g-cat) | XS (% by mass) | Molecular weight distribution Mw/Mn | ICP activity (g-ICP/g-cat) | Block ratio (% by mass) | Percent EPR content (% by mass) |
|---|---|---|---|---|---|---|
| Example 1 | 45,100 | 1.4 | 8.4 | 7,500 | 18.9 | 18.1 |
| Example 2 | 38,400 | 1.6 | 9.1 | 6,500 | 20.3 | 20.1 |
| Example 3 | 22,400 | 1.6 | 10.0 | 6,200 | 25.4 | 25.1 |
| Comparative Example 1 | 53,800 | 1.8 | 8.4 | 7,600 | 18.1 | 17.2 |
| Comparative Example 2 | 19,500 | 1.1 | 5.7 | 5,500 | 25.7 | 23.5 |

As is evident from Table 1, propylene polymers to be obtained in Examples 1 to 3 had maintained low XS and high stereoregularity by containing a magnesium atom, a titanium atom, and a halogen atom as well as an ether carbonate compound (A) and a succinic acid diester compound (B) at a specific ratio; the polymers having a high Mw/Mn (a wide molecular weight distribution) could also be obtained; and a copolymer having a high block ratio and percent EPR content with good mechanical strength could be suitably prepared during the copolymerization.

On the other hand, as is evident from Table 1, since the solid catalyst component for polymerization of an olefin in Comparative Example 1 did not contain a predetermined amount of an ether carbonate compound (A) together with a succinic acid diester compound (B), the resulting propylene polymer had high XS (poor stereoregularity) while the resulting copolymer had a low block ratio and percent EPR content and was inferior in mechanical strength, compared to those in Example 1 and the like.

As is evident from Table 1, since the solid catalyst component for polymerization of an olefin in Comparative Example 2 did not contain a predetermined amount of a succinic acid diester compound (B) together with an ether carbonate compound (A), the resulting propylene polymer had narrow molecular weight distribution and was inferior in the propylene polymerization activity and ICP activity during the copolymerization compared with those in Example 1 and the like.

[Industrial Applicability]

The present invention can provide a solid catalyst component for polymerization of an olefin which is capable of realizing stereoregularity and wide molecular weight distribution of the resulting polymer, copolymerization activity, and block ratio of the resulting copolymer in a well-balanced manner while satisfying these properties at a level sufficient for practical use despite containing an electron-donating compound other than a phthalic acid ester, and can provide a catalyst for polymerization of an olefin and a method for producing a polymer of an olefin by using the solid catalyst component for polymerization of an olefin according to the present invention.

## Claims

1. A solid catalyst component for polymerization of an olefin, comprising: magnesium, titanium, halogen, an ether carbonate compound (A), and a succinic acid diester compound (B), wherein
a molar ratio represented by the following expression is 0.01 to 1.00:
content of the ether carbonate compound (A) / content of the succinic acid diester compound (B).

2. The solid catalyst component for polymerization of an olefin according to claim 1, wherein the ether carbonate compound (A) is one or more selected from compounds represented by the following general formula (1) :

$$R^1\text{-O-C (=O)-O-Z-O-}R^2 \qquad (1)$$

wherein $R^1$ and $R^2$ are the same as or different from each other and each represent a linear alkyl group having 1 to 20 carbon atoms, a branched alkyl group having 3 to 20 carbon atoms, a vinyl group, a linear alkenyl group or branched alkenyl group having 3 to 20 carbon atoms, a linear halogen-substituted alkyl group having 1 to 20 carbon atoms, a branched halogen-substituted alkyl group having 3 to 20 carbon atoms, a linear halogen-substituted alkenyl group having 2 to 20 carbon atoms, a branched halogen-substituted alkenyl group having 3 to 20 carbon atoms, a cycloalkyl group having 3 to 20 carbon atoms, a cycloalkenyl group having 3 to 20 carbon atoms, a halogen-substituted cycloalkyl group having 3 to 20 carbon atoms, a halogen-substituted cycloalkenyl group having 3 to 20 carbon atoms, an aromatic hydrocarbon group having 6 to 24 carbon atoms, a halogen-substituted aromatic hydrocarbon group having 6 to 24 carbon atoms, a nitrogen atom-containing hydrocarbon group having 2 to 24 carbon atoms and having a carbon atom at a bonding end, an oxygen atom-containing hydrocarbon group having 2 to 24 carbon atoms and having a carbon atom at a bonding end, or a phosphorus-containing hydrocarbon group having 2 to 24 carbon atoms and having a carbon atom at a bonding end, except for the nitrogen atom-containing hydrocarbon group having 2 to 24 carbon atoms with a C=N group at a bonding end, the oxygen atom-containing hydrocarbon group having 2 to 24 carbon atoms with a carbonyl group at a bonding end, and the phosphorus-containing hydrocarbon group having 2 to 24 carbon atoms with a C=P group at a bonding end; and Z represents a linking group forming a linkage via a carbon atom or a carbon chain.

3. The solid catalyst component for polymerization of an olefin according to claim 1, wherein the succinic acid diester compound (B) is one or more selected from compounds represented by the following general formula (2) :

[Formula 1]

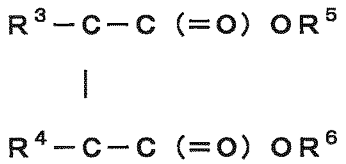

(2)

wherein $R^3$ and $R^4$ are the same as or different from each other and are each a hydrogen atom or an alkyl group having 1 to 4 carbon atoms; and $R^5$ and $R^6$ are the same as or different from each other and are each a linear alkyl group or branched alkyl group having 2 to 4 carbon atoms.

4. A catalyst for polymerization of an olefin, comprising:

   (I) the solid catalyst component for polymerization of an olefin according to claim 1; and
   (II) an organoaluminum compound represented by the following general formula (3):

   $$R^7_pAlQ_{3-p} \qquad (3)$$

   wherein $R^7$ is an alkyl group having 1 to 6 carbon atoms; Q is a hydrogen atom or halogen; p is a real number of $0 < p \leq 3$; when a plurality of $R^7$ are present, each $R^7$ is the same as or different from each other; and when a plurality of Q are present, each Q is the same as or different from each other.

5. The catalyst for polymerization of an olefin according to claim 4, comprising:

(I) the solid catalyst component for polymerization of an olefin according to claim 1;
(II) an organoaluminum compound represented by the following general formula (3):

$$R^7_pAlQ_{3-p} \quad (3)$$

wherein $R^7$ is an alkyl group having 1 to 6 carbon atoms; Q is a hydrogen atom or halogen; p is a real number of $0 < p \leq 3$; when a plurality of $R^7$ are present, each $R^7$ is the same as or different from each other; and when a plurality of Q are present, each Q is the same as or different from each other; and
(III) an external electron-donating compound.

**6.** A method for producing a polymer of an olefin, comprising polymerizing an olefin in the presence of the catalyst for polymerization of an olefin according to claim 4.

**7.** A method for producing a polymer of an olefin, comprising polymerizing an olefin in the presence of the catalyst for polymerization of an olefin according to claim 5.

## INTERNATIONAL SEARCH REPORT

International application No. PCT/JP2021/010320

A. CLASSIFICATION OF SUBJECT MATTER
Int.Cl. C08F4/654(2006.01)i, C08F10/00(2006.01)i
FI: C08F4/654, C08F10/00510

According to International Patent Classification (IPC) or to both national classification and IPC

B. FIELDS SEARCHED

Minimum documentation searched (classification system followed by classification symbols)
Int.Cl. C08F4/654, C08F10/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | WO 2016/121551 A1 (TOHO TITANIUM CO., LTD.) 04 August 2016 (2016-08-04), claims, examples | 1-7 |
| A | CN 107344979 A (CHINA PETROLEUM & CHEMICAL CORPORATION) 14 November 2017 (2017-11-14), claims, examples | 1-7 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 May 2021 | 18 May 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/010320

| | | |
|---|---|---|
| WO 2016/121551 A1 | 04 August 2016 | US 2018/0265612 A1<br>claims, examples<br>EP 3255068 A1<br>CN 107207646 A<br>KR 10-2017-0110077 A |
| CN 107344979 A | 14 November 2017 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 57063310 A
- JP 58004132 A
- JP 62051633 A
- JP 3074341 A
- JP 4368391 A
- JP 8073388 A